(19) Europäisches Patentamt
European Patent Office
Office européen des brevets

(11) **EP 4 489 336 A1**

(12) **EUROPEAN PATENT APPLICATION**
published in accordance with Art. 153(4) EPC

(43) Date of publication:
**08.01.2025 Bulletin 2025/02**

(51) International Patent Classification (IPC):
**H04L 1/08** (2006.01)   **H04L 7/033** (2006.01)
**H04L 7/04** (2006.01)

(21) Application number: **22933398.4**

(22) Date of filing: **24.03.2022**

(52) Cooperative Patent Classification (CPC):
**H04L 1/08; H04L 7/033; H04L 7/04**

(86) International application number:
**PCT/JP2022/013977**

(87) International publication number:
**WO 2023/181257 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KSKB Co., Ltd.**
**Tokyo, 152-0034 (JP)**

(72) Inventor: **YAMAGATA, Akihiko**
**Tokyo 154-0001 (JP)**

(74) Representative: **Vossius & Partner**
**Patentanwälte Rechtsanwälte mbB**
**Siebertstraße 3**
**81675 München (DE)**

(54) **COMMUNICATION DEVICE, COMMUNICATION METHOD, COMMUNICATION PROGRAM, AND COMMUNICATION SYSTEM**

(57)   A communication apparatus is provided that: adds data, obtained by sampling a repetitively arrived packet by a clock with a frequency that is N1-times a communication speed, to an addition result of previously arrived packets every time the packet arrives; holds a processing result of a first digital filter with N2 taps (where N2 is an integer of 2 or more and N1 or less) that processes the addition result in synchronization with a sampling clock; reproduces a clock waveform contained in bit data from a result of processing by a second digital filter with N3 taps (where N3 is an integer of 2 or more and N1 or less), the second digital filter process, in synchronization with the sampling clock, an addition result obtained by adding data, which is obtained by sampling each bit constituting the arrived packet by the clock with a frequency that is N1-times a communication speed, to an addition result of previously arrived packet every time a next bit arrives; and reproduces a sampling clock synchronized with the arrived packet from the reproduced clock waveform.

[Fig. 4]

## Description

[Technical Field]

The present invention relates to a communication apparatus, a communication method, a communication program, and a communication system.

[Background]

As a system that enable communication to be performed even in situations with extremely high noise levels regardless of being wired or wireless, PTL 1 proposes a method. A feature of the method proposed in PTL 1 is that: a transmitter repetitively transmits data packets with a same content and a receiver, by sequentially receiving and integrating (adding) the data packets with the same content, removes a random noise component contained in the packets.

[Citation List]

[Patent Literature]

[PTL 1] Japanese Patent No. 5247888

[Summary]

[Technical Problem]

In the technique proposed in PTL 1, noise is removed by integrating packets with a same content. However, in order to have an integration of packets with the same content actually elicit a noise-reduction effect, a clock frequency used when the transmitting side transmits packets and a clock frequency used when the receiving side samples the packets have to accurately match each other. In other words, in order to have an integration of packets with the same content actually elicit a noise-reduction effect, a phase of a clock used when the transmitting side transmits packets and a phase of a clock used when the receiving side samples the packets have to be synchronized. If there is a difference in clock frequencies between the transmitter and the receiver, a deviation in sampling timings is created as the receiver integrates the packets and once the deviation reaches an amount corresponding to one bit, interference occurs between adjacent bits and this prevents correct data from being acquired.

In order to prevent such a situation, it is considered that, for example, a mechanism for synchronizing respective clocks of a transmitter and a receiver such as synchronizing clock timings using a PPS (Pulse Per Second) signal output by a GPS (Global Positioning System) receiver be adopted. However, since using a GPS requires that a GPS receiver be always capable of receiving satellite radio waves, communication becomes virtually impossible when it is difficult to receive satellite radio waves due to the transmitter and/or the receiver being, for instance, indoors or in a shadow of a building.

When removing noise by integrating (adding) packets, the larger the number of additions, the higher the effect of noise removal (referred to as "an effect of longitudinal integration"). However, with the method described in PTL 1, a packet cannot be oversampled at a higher frequency than a bit rate. Therefore, in reality, an additional effect of noise removal (referred to as "an effect of lateral integration") due to the addition of N-number of pieces of data obtained by sampling at different timings during one packet period by N-times oversampling cannot be actually obtained.

In addition, with the method described in PTL 1, since no description is provided on a sampling timing during one bit period, sampling cannot necessarily be performed at a timing with a best S/N ratio (in other words, a timing at which an eye pattern is most open) in one bit period and, therefore, a data error rate cannot necessarily be minimized.

The present invention has been made in consideration of the points described above and an object thereof is to provide a communication apparatus, a communication method, a communication program, and a communication system matching a clock frequency used when a transmitting side transmits a packet and a clock frequency used when a receiving side samples the packet with each other, and synchronizing a phase of the transmitting-side clock and a phase of the receiving-side clock with each other, so as to enable the receiving side to accurately acquire correct data.

[Solution to Problem]

An aspect of the present invention provides a communication apparatus, including: a first adding unit that adds data, obtained by sampling a repetitively arrived packet by a clock with a frequency that is N1-times a communication speed, to an addition result of previously arrived packets every time the packet arrives; a first holding unit that holds the addition result of the first adding unit; a first digital filter with N2 taps (where N2 is an integer of 2 or more and N1 or less) that processes the addition result, held by the first holding unit, in synchronization with a sampling clock; and a second holding unit that holds a processing result of the first digital filter.

The communication apparatus may further include: a correlation unit that correlates a result processed by the first digital filter with a synchronous word; and a data acquiring unit that retrieves data from the result processed by the first digital filter at a timing where correlation by the correlation unit increases.

The communication apparatus may further include: a second adding unit that adds data, obtained by sampling each bit constituting the arrived packet by the clock with a frequency that is N1-times a communication speed, to an addition result of previously arrived bits every time a next bit arrives; a third holding unit that holds an addition result of the second adding unit; a second digital filter with N3 taps (where N3 is an integer of 2 or more and N1 or less) that processes the addition result, held by the third holding unit, in synchronization with the sampling clock; a fourth holding unit that holds a processing result of the second digital filter; a clock pattern reproducing unit that reproduces a clock waveform included in bit data from data held by the fourth holding unit; and a clock reproducing unit that reproduces a sampling clock synchronized with the arrived packet from the clock waveform reproduced by the clock pattern reproducing unit.

The clock reproducing unit may include: a numerically controlled oscillator that is driven by another clock; a phase frequency comparator that compares a reproduced clock obtained by binarizing a clock waveform reproduced by the clock pattern reproducing unit and a frequency-divided clock of the sampling clock to be reproduced and that outputs a signal in accordance with a phase difference and a frequency difference; and a loop filter that generates a control signal for controlling the numerically controlled oscillator from an output signal of the phase frequency comparator.

A value of N2 and a value of N3 may be the same.

The communication apparatus may further include: a lock signal generating unit that validates a lock signal when it is detected that a frequency and a phase of the sampling clock reproduced by the clock reproducing unit are stable; and a clock switching unit that switches to a sampling clock generated from an internal operating clock when the lock signal is not valid and switches to a sampling clock reproduced by the clock reproducing unit when the lock signal is valid.

Another aspect of the present invention provides a communication method causing a processor to execute processing of: adding data, obtained by sampling a repetitively arrived packet by a clock with a frequency that is N1-times a communication speed, to an addition result of previously arrived packets every time the packet arrives; causing a first memory to hold the result of the addition; causing a digital filter with N2 taps (where N2 is an integer of 2 or more and N1 or less) to process the addition result, held in the first memory, in synchronization with a sampling clock; and causing a second memory to hold a processing result of the digital filter.

Another aspect of the present invention provides a communication program causing a computer to execute processing of: adding data, obtained by sampling a repetitively arrived packet by a clock with a frequency that is N1-times a communication speed, to an addition result of previously arrived packets every time the packet arrives; causing a first memory to hold the result of the addition; causing a digital filter with N2 taps (where N2 is an integer of 2 or more and N1 or less) to process the addition result, held in the first memory, in synchronization with a sampling clock; and causing a second memory to hold a processing result of the digital filter.

Another aspect of the present invention provides a communication system, including: a transmitting-side communication apparatus; and a receiving-side communication apparatus, wherein the transmitting-side communication apparatus includes a transmitting unit that repetitively transmits a single packet, and the receiving-side communication apparatus includes: a first adding unit that adds data, obtained by sampling a packet repetitively arriving from the transmitting-side communication apparatus by a clock with a frequency that is N1-times a communication speed, to an addition result of previously arrived packets every time the packet arrives; a first holding unit that holds the addition result of the first adding unit; a first digital filter with N2 taps (where N2 is an integer of 2 or more) that processes the addition result, held by the first holding unit, in synchronization with a sampling clock; and a second holding unit that holds a processing result of the first digital filter.

[Advantageous Effects of Invention]

The present invention can provide a communication apparatus, a communication method, a communication program, and a communication system which matches a clock frequency used when a transmitting side transmits a packet and a clock frequency used when a receiving side samples the packet with each other and synchronizes a phase of the transmitting-side clock and a phase of the receiving-side clock with each other to enable the receiving side to accurately acquire correct data.

[Brief Description of Drawings]

[Fig. 1]

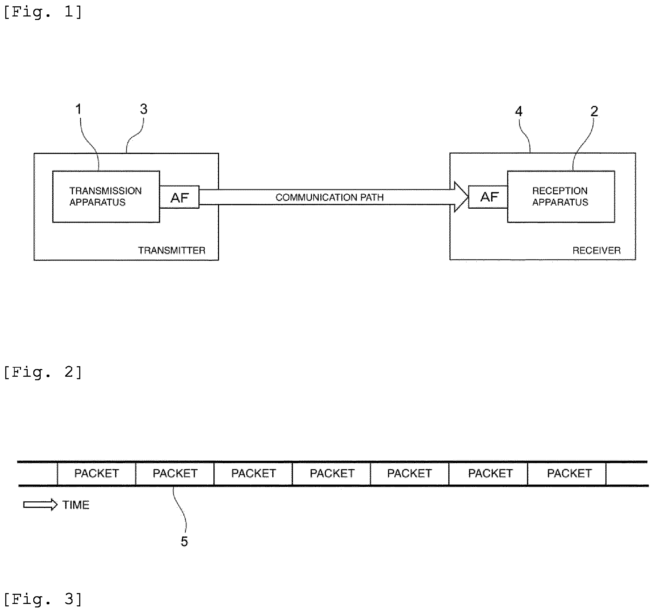

Fig. 1 is a diagram showing a general configuration of a digital communication system according to the present embodiment.
[Fig. 2]
Fig. 2 is a diagram showing a configuration of a packet sent from a transmission apparatus.
[Fig. 3]
Fig. 3 is a diagram showing a general configuration of a reception apparatus according to the present embodiment.
[Fig. 4]

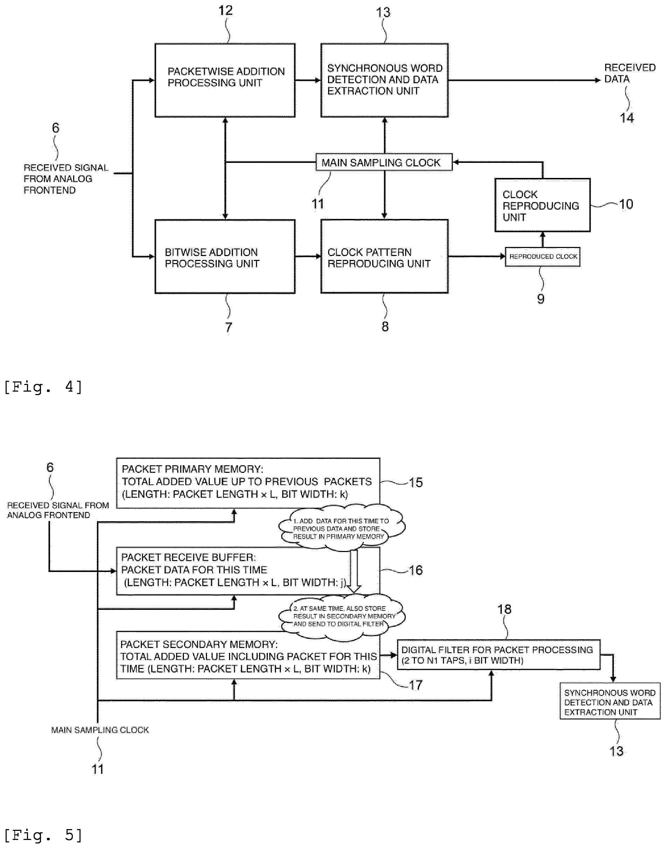

Fig. 4 is a diagram showing an outline of an addition processing unit.
[Fig. 5]
Fig. 5 is a diagram showing an outline of a synchronous word detection and data extraction unit.
[Fig. 6]

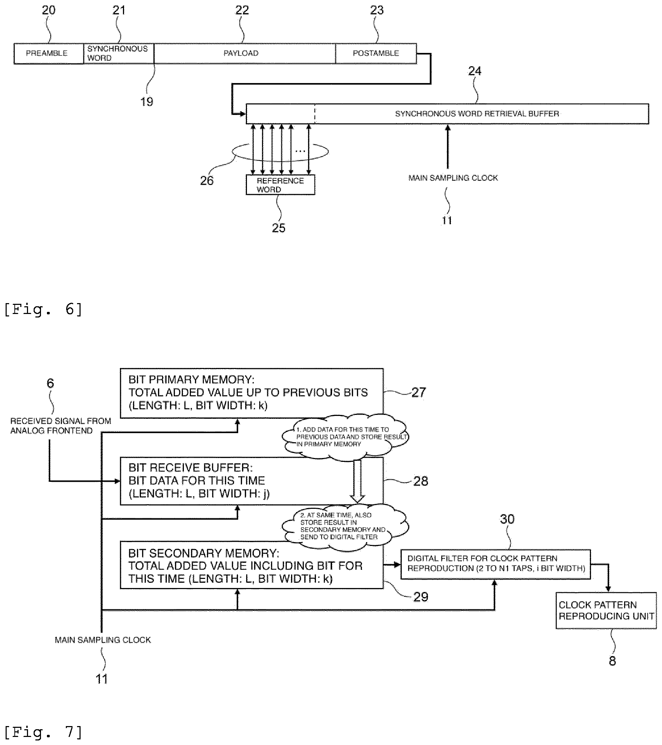

Fig. 6 is a diagram showing an outline of a bitwise addition processing unit.

[Fig. 7]
Fig. 7 is a diagram showing an outline of a clock reproducing unit.
[Fig. 8]

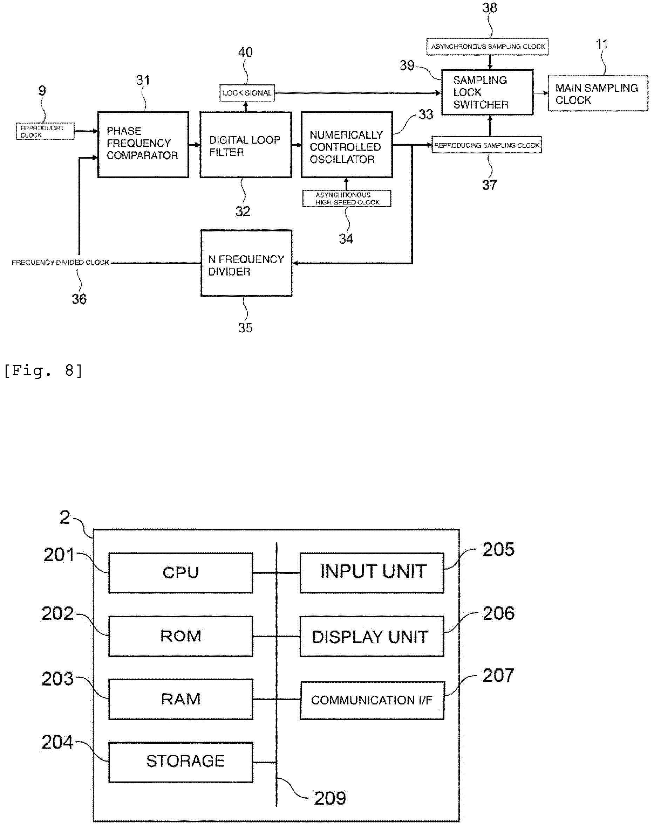

Fig. 8 is a block diagram showing a hardware configuration of the reception apparatus.

[Detailed Description]

Hereinafter, an example of an embodiment of the present invention will be described with reference to the drawings. Note that same reference signs are attached to same or equivalent components and portions in each drawing. In addition, dimension ratios in the drawings have been exaggerated for convenience's sake and may differ from actual ratios.

Fig. 1 is a diagram showing a general configuration of a digital communication system according to the present embodiment. A transmitter 3 includes a transmission apparatus 1 and an analog frontend AF for transmission, and a receiver 4 includes a reception apparatus 2 and an analog frontend AF for reception. A configuration of the analog frontend AF is determined in accordance with a medium or characteristics of a communication path and the analog frontend AF is necessary for communication system. A detailed description thereof will be omitted.

Fig. 2 is a diagram showing a configuration of a packet sent from the transmission apparatus 1 in the digital communication system according to the present embodiment. As shown in Fig. 2, the transmission apparatus 1 repetitively and continuously sends, without interruption, a packet 5 including a message to be transmitted.

Fig. 3 is a diagram showing a general configuration of the reception apparatus 2 in the digital communication system according to the present embodiment.

The reception apparatus 2 is constituted of an addition processing unit 12 that performs addition processing in units of packets, a synchronous word detection and data extraction unit 13, an addition processing unit 7 that performs addition processing in units of bits, a clock pattern reproducing unit 8, and a clock reproducing unit 10.

General steps of signal processing in the reception apparatus 2 will be described with reference to Fig. 3.

The addition processing unit 12 that performs addition processing in units of packets is driven by a main sampling clock 11 output from the clock reproducing unit 10. The addition processing unit 12 adds a received signal 6 from the analog frontend AF in units of packets and sequentially passes an addition result through a digital filter with N2 taps while storing the addition result in an internal memory. In addition, the addition processing unit 12 sends a processing result of the digital filter to the synchronous word detection and data extraction unit 13 in a subsequent stage.

The synchronous word detection and data extraction unit 13 is driven by the main sampling clock 11 in a same manner as the addition processing unit 12. The synchronous word detection and data extraction unit 13 detects a synchronous word from the processing result sent from the addition processing unit 12 and extracts data in a packet at a timing with a highest apparent S/N ratio. The data extracted by the synchronous word detection and data extraction unit 13 will be referred to as received data 14.

The addition processing unit 7 that performs addition processing in units of bits is driven by the main sampling clock 11 output from the clock reproducing unit 10. The addition processing unit 7 adds the received signal 6 from the analog frontend AF in units of bits and passes an addition result through a digital filter with N3 taps. In addition, the addition processing unit 7 sends a processing result of the digital filter to the clock pattern reproducing unit 8 in a subsequent stage.

The clock pattern reproducing unit 8 is driven by the main sampling clock 11 in a same manner as the addition processing units 7 and 12. The clock pattern reproducing unit 8 generates a reproduced clock 9 by binarizing a processing result sent from the addition processing unit 7 that performs addition processing in units of bits.

The clock reproducing unit 10 generates the main sampling clock 11 that is an N1-multiplied clock of a clock synchronized with the reproduced clock. The main sampling clock 11 is supplied to the addition processing unit 12 that performs addition processing in units of packets, the synchronous word detection and data extraction unit 13, the addition processing unit 7 that performs addition processing in units of bits, and the clock pattern reproducing unit 8.

Fig. 4 is a diagram showing an outline of the packetwise addition processing unit 12. The packetwise addition processing unit 12 includes a packet primary memory 15, a packet receive buffer 16, a packet secondary memory 17, and an FIR (Finite impulse response) digital filter 18. The number of taps of the FIR digital filter 18 is N2 (where N2 is selected from 2 or more and N1 or less in accordance with characteristics of the filter).

The signal 6 from the analog frontend AF has a word width of 1 to j bits depending on a configuration of an output circuit of the analog frontend AF, and one word at a time is captured by the packet receive buffer 16 in each cycle of the main sampling clock 11 at an oversampling rate L.

The packet receive buffer 16 is an example of the first adding unit according to the present invention. The packet receive buffer 16 has a word length of packet length $\times$ L and is capable of capturing one packet's worth of word data of the received signal 6 from the analog frontend AF.

Once the packet receive buffer 16 captures one packet's worth of word data corresponding to a first packet of which reception has started, as first addition processing, the packet receive buffer 16 stores contents of the one packet's worth of word data in the packet primary memory 15 having a word length of packet length × L and also stores the one packet's worth of word data in the packet secondary memory 17 having the same word length as the packet primary memory 15. The packet primary memory 15 is an example of the first holding unit according to the present invention. The packet secondary memory 17 is an example of the second holding unit according to the present invention.

The packet receive buffer 16 further captures one packet's worth of word data corresponding to a next packet, performs second addition processing with word data previously captured and stored in the packet primary memory 15, once again stores a result in the packet primary memory 15 by overwriting the packet primary memory 15, and also stores the result in the packet secondary memory 17.

When the packetwise addition processing unit 12 performs m-th addition processing of word data of the received signal 6 from the analog frontend AF, an m-th addition processing result is stored in the packet primary memory 15 and the m-th addition processing result is to be used for m+1-th addition processing.

In addition, when the packetwise addition processing unit 12 performs the m-th addition processing of word data of the received signal 6 from the analog frontend AF, the m-th addition processing result is also stored in the packet secondary memory 17 and the m-th addition processing result is to be sent to the FIR digital filter 18 for packet processing in a subsequent stage.

Based on the above, a bit width k of the packet primary memory 15 and the packet secondary memory 17 necessary for the m-th addition processing can be obtained using a logarithmic function by

$$k = \log_2 m + j.$$

As the FIR digital filter 18, an optimal configuration is selected in accordance with a code format and an oversampling rate. In the present embodiment, Manchester code is adopted as the code format, and when adopting a moving-average filter that obtains a moving average of bits after coding as a configuration example of the FIR digital filter 18, the number of taps N2 may be set to

$$N = L/2.$$

Generally, digital filter processing enables noise of a specific frequency component to be reduced. Since the moving-average filter can perform addition processing between adjacent pieces of sampling data in a bit interval, the FIR digital filter 18 contributes to reducing additional random noise with respect to a packet period.

A result of processing by passing the addition processing result stored in the packet secondary memory 17 through the FIR digital filter 18 for packet processing is sent to the synchronous word detection and data extraction unit 13. Using a logarithmic function, a bit width i of the processing result of the FIR digital filter 18 for packet processing is expressed by

$$i = k + \log_2 N2.$$

Fig. 5 is a diagram showing an outline of the synchronous word detection and data extraction unit 13. The synchronous word detection and data extraction unit 13 is an example of the data acquiring unit according to the present invention.

A transmitted packet from the transmission apparatus 1 is mainly constituted of a synchronous word 21 and a payload 22 containing data to be communicated and an error-detecting code or an error-correcting code and, when necessary, a preamble 20 and a postamble 23 are added before and after the transmitted packet.

While output data 19 from the FIR digital filter 18 for packet processing has a bit width of i bits and still has residual noise superimposed thereon, the structure of the transmitted packet described above is more or less maintained. The output data 19 is captured by a synchronous word retrieval buffer 24 according to the main sampling clock 11.

The synchronous word retrieval buffer 24 has a same word length as the structure of the transmitted packet and a correlator 26 correlates a head of data stored in the synchronous word retrieval buffer 24 with a reference word 25 of which contents are the same as the synchronous word and of which a bit width is 1 bit. Since the synchronous word is conceivably held in the head of the synchronous word retrieval buffer 24 at a moment where correlation is highest, the synchronous word detection and data extraction unit 13 extracts data by extracting an immediately subsequent payload.

Generally, data not determined as an error by the error-detecting code or data corrected by the error-correcting code contained in the payload is extracted as correct received data 14.

Since the synchronous word 21 and the reference word 25 are conceivably vectors of a same dimension, the correlator 26 may adopt a timing at which an inner product value between a head of the synchronous word retrieval buffer 24 and the reference word is maximized as the timing at which a highest correlation is obtained or may calculate a coefficient of correlation instead of calculating the inner product of the vectors.

Fig. 6 is a diagram showing an outline of the bitwise addition processing unit 7. The bitwise addition processing unit 7 includes a bit primary memory 27, a bit receive buffer 28, a bit secondary memory 29, and an FIR digital filter 30. The number of taps of the FIR digital filter 30 is N3 (where N3 is selected from 2 or more and N1 or less in accordance with characteristics of the filter).

The received signal 6 from the analog frontend AF has a word width of 1 to j bits depending on a configuration of an output circuit of the analog frontend AF and is captured by the bit receive buffer 28 in each cycle of the main sampling clock 11 at an oversampling rate L.

The bit receive buffer 28 has a word length of L and is capable of capturing one bit's worth of word data of the received signal 6 from the analog frontend AF.

Once the bit receive buffer 28 captures one bit's worth of word data corresponding to a first bit of which reception has started, as first addition processing, the bit receive buffer 28 stores contents of the one bit's worth of word data in the bit primary memory 27 having a word length of L and also stores the one bit's worth of word data in the bit secondary memory 29 having the same word length as the bit primary memory 27.

The bit receive buffer 28 further captures one bit's worth of word data corresponding to a next bit and performs second addition processing of the captured word data with word data immediately previously captured and stored in the bit primary memory 27. In addition, the bit receive buffer 28 once again stores a result of the addition processing in the bit primary memory 27 by overwriting the bit primary memory 27 and also stores the result in the bit secondary memory 29. The bit primary memory 27 is an example of the third holding unit according to the present invention. The bit secondary memory 29 is an example of the fourth holding unit according to the present invention.

When the bitwise addition processing unit 7 performs m-th addition processing of word data of the received signal 6 from the analog frontend AF, an m-th addition processing result is stored in the bit primary memory 27 and the m-th addition processing result is to be used for m+1-th addition processing.

In addition, the bitwise addition processing unit 7 also stores the m-th addition processing result in the bit secondary memory 29 and the m-th addition processing result is to be sent to the FIR digital filter 30 for clock pattern reproduction in a subsequent stage.

Based on the above, a bit width k of the bit primary memory 27 and the bit secondary memory 29 necessary for the m-th addition processing can be obtained using a logarithmic function by

$$k = \log_2 m + j.$$

The number of taps N3 of the FIR digital filter 30 for clock pattern reproduction may be set so as to match the number of taps N2 of the FIR digital filter 18 for packet processing to

$$N3 = L/2.$$

Matching the number of taps N2 of the FIR digital filter 18 and the number of taps N3 of the FIR digital filter 30 enables a time required for addition processing in units of packets and a time required for addition processing in units of bits to be made the same.

Generally, digital filter processing enables noise of a specific frequency component to be reduced. Since also adopting a moving-average filter as the FIR digital filter 30 for clock pattern reproduction enables addition processing between adjacent pieces of sampling data in a bit interval to be performed, the FIR digital filter 30 for clock pattern reproduction contributes to reducing additional random noise with respect to a bit period.

A result of processing by passing the addition processing result stored in the bit secondary memory 29 through the FIR digital filter 30 for clock pattern reproduction is sent to the clock pattern reproducing unit 8.

Using a logarithmic function, a bit width i of the processing result of the FIR digital filter 30 for clock pattern reproduction is expressed by

$$i = k + \log_2 N3.$$

The clock pattern reproducing unit 8 calculates an average value of outputs of the FIR digital filter 30 for clock pattern reproduction with a bit width of i according to the main sampling clock and calculates a threshold for comparator processing from the calculated average value. In addition, the clock pattern reproducing unit 8 binarizes the output of the FIR digital filter 30 for clock pattern reproduction by comparator processing and generates a reproduced clock 9.

Fig. 7 is a diagram showing an outline of the clock reproducing unit 10. The clock reproducing unit 10 is constituted of a phase frequency comparator 31, a digital loop filter 32, a numerically controlled oscillator 33, an N frequency divider 35, and a sampling clock switcher 39.

In the clock reproducing unit 10, a frequency-divided clock 36 is generated by dividing, by the N frequency divider 35, a reproducing sampling clock 37 output from the numerically controlled oscillator 33 that is driven by an asynchronous high-speed clock 34. In addition, in the clock reproducing unit 10, a phase difference and a frequency difference between the reproduced clock 9 generated by the clock pattern reproducing unit 8 and the frequency-divided clock 36 are compared by the phase frequency comparator 31. Furthermore, in the clock reproducing unit 10, an output signal of the phase frequency comparator 31 is processed by the digital loop filter 32 to generate a control signal and the control signal generated by the digital loop filter 32 is output to the numerically controlled oscillator 33.

The reproducing sampling clock 37 generated by the numerically controlled oscillator 33 is set so as to be approximately N times the frequency of the reproduced clock, where N is an integer value. The N frequency divider 35 divides the reproducing sampling clock 37 by N and generates the frequency-divided clock 36. The frequency-divided clock 36 is used for a comparison with the reproduced clock 9.

Based on contents of the signal from the phase frequency comparator 31, when an operation of the clock reproducing unit 10 is stable and a phase and a frequency of the reproducing sampling clock 37 are stable, the digital loop filter 32 validates a lock signal 40 and outputs the lock signal 40 to the sampling clock switcher 39. The digital loop filter 32 is an example of the lock signal generator according to the present invention.

When the lock signal 40 is not valid or, in other words, when the phase and the frequency of the reproducing sampling clock 37 are not stable, the sampling clock switcher 39 selects an asynchronous sampling clock 38 that has a roughly similar frequency but operates completely asynchronously as a source of the main sampling clock 11.

On the other hand, when the lock signal 40 is valid or, in other words, when the phase and the frequency of the reproducing sampling clock 37 are stable, the sampling clock switcher 39 selects the reproducing sampling clock 37 as the source of the main sampling clock 11.

As a method of validating and outputting the lock signal 40, for example, the lock signal 40 may be validated and output at a timing where a change in the signal that is generated by the digital loop filter 32 and controls the numerically controlled oscillator 33 decreases. Whether or not a change in the control signal from the phase frequency comparator 31 has similarly decreased at this timing may be used as an additional criterion to decide whether or not the lock signal 40 should be validated.

The reproducing sampling clock 37 may become unstable due to reasons such as an insufficient number of processing times. By adopting the asynchronous sampling clock 38 with a relatively similar frequency as the main sampling clock 11 until a lock state is confirmed by the lock signal 40, the clock reproducing unit 10 according to the present embodiment can operate other portions such as the packetwise addition processing unit 12 in a stable manner until the operation of the clock reproducing unit 10 stabilizes.

In addition, once the lock signal 40 becomes active and the main sampling clock 11 is switched to the stable reproducing sampling clock 37, a transmission clock of the transmission apparatus 1 and a reception clock of the reception apparatus 2 become synchronized and data can be extracted without causing inter-bit interference even if the number of additions increases.

Since the technique described in the present embodiment also provides a technique that enables communication to be performed in a stable manner over a long period of time even in a high-noise environment, for example, the technique can be applied to an emergency beacon worn by a person in distress to be used to search for the person, a communication apparatus for smart meters which are deployed in large numbers in urban areas and which are designed to streamline meter-reading of consumption of electricity, gas, and water, and the like.

In the application to an emergency beacon to be used to search for a person in distress, for example, a case where a call packet is wirelessly sent from a distant base station to the beacon is conceivable. The beacon receives the extremely weak call packet from the base station and wirelessly sends information on a present location of the beacon as a response packet. By receiving and analyzing the response packet, the base station can assess a position of the person in distress and lead the way to a prompt rescue operation. Since the technique described in the present embodiment can be realized in an extremely small size and with low power consumption due to the conversion of electric circuits into semiconductors, the beacon itself can also be made extremely small and, for example, the beacon can be worn as a part of climbing gear or embedded in a life jacket or the like in anticipation of a possible maritime accident.

In addition, in the application to smart meters, due to the extremely large number of smart meters already being installed, electromagnetic waves emitted by other meters may act as a noise source when assessing a state of a given meter by wireless communication and may interfere with the communication with the meter to be assessed. Even in such a high-noise situation, for example, by calling a specific meter from a base station using a response packet, the specific meter can communicate with the base station by sending back information on consumption in the form of a response packet.

Generally, when considering the state of wireless communication in the near future with a significantly deteriorated electromagnetic noise environment due to an explosive increase in so-called IOT (Internet of Things) devices, the technique described in the present embodiment enables stable communication to be performed even in a high-noise environment and is therefore extremely effective.

Next, a hardware configuration of the reception apparatus 2 will be described. Fig. 8 is a block diagram showing the hardware configuration of the reception apparatus 2.

As shown in Fig. 8, the reception apparatus 2 includes a CPU (Central Processing Unit) 201, a ROM (Read Only Memory) 202, a RAM (Random Access Memory) 203, a storage 204, an input unit 205, a display unit 206, and a communication interface (I/F) 207. Each component is connected so as to be capable of communicating with each other by a bus 209.

The CPU 201 is a central arithmetic processing unit which executes various programs and controls respective units. In other words, the CPU 201 reads programs from the ROM 202 or the storage 204 and executes the programs using the RAM 203 as a work area. The CPU 201 performs control of the respective components described above and various kinds of arithmetic processing according to the programs recorded in the ROM 202 or the storage 204. In the present embodiment, a communication program for executing communication processing of receiving a packet transmitted from the transmitter 3 as described above is stored in the ROM 202 or the storage 204.

The ROM 202 stores various programs and various kinds of data. The RAM 203 temporarily stores programs or data as a work area. The storage 204 is constituted of a storage apparatus such as an HDD (Hard Disk Drive), an SSD (Solid State Drive), or a flash memory and stores various programs including an operating system and various kinds of data.

The input unit 205 includes a pointing device such as a mouse and a keyboard and is used to perform various kinds of input.

The display unit 206 is, for example, a liquid crystal display and displays various kinds of information. A touch panel system may be adopted as the display unit 206 to also function as the input unit 205.

The communication interface 207 is an interface for communicating with other devices such as the transmission apparatus 1 and, for example, a standard such as Ethernet (registered trademark), FDDI, or Wi-Fi (registered trademark) is used.

When executing the communication program described above, the reception apparatus 2 realizes the various functions described above using the hardware resources described above.

The reception apparatus 2 according to the present embodiment not only reduces noise by oversampling a same packet repetitively arriving at the reception apparatus by a sampling clock with a frequency that is N-times a bit rate and adding data obtained in such a manner in packet units as described in PTL but can also produce a noise reduction effect by subjecting the data acquired by oversampling to processing by a digital filter.

In addition, since a packet is not necessarily sampled at a point with a good S/N ratio depending on a timing of sampling even when a noise reduction effect such as that described earlier is attained, calculating a correlation between data acquired by oversampling and a synchronous word according to a sampling clock and performing data acquisition based on a point where a correlation value is maximized in accordance with the present invention enables data to be acquired at a point with a high S/N ratio.

Furthermore, when the frequency of a clock when the transmission apparatus 1 transmits a packet and the frequency of a clock when the reception apparatus samples a received packet deviate from each other, since performing addition processing a large number of times in the reception apparatus 2 causes an effect of the deviation to create interference between adjacent bits and leads to an error in the received data, in accordance with the present embodiment, a clock waveform contained in bit data can be reproduced by addition processing of data oversampled in units of bits in addition to units of packets and a sampling clock synchronized with the received packet can be reproduced from the reproduced clock waveform.

While the reception apparatus 2 is capable of reproducing a sampling clock synchronized with a received packet according to the processing described above, since a reproducing sampling clock is unstable when the number of bitwise addition processing times is insufficient, whether or not a stable reproducing sampling clock is obtained can be determined by a lock signal.

Therefore, when the reproducing sampling clock is unstable, the reception apparatus 2 can perform processing in a seamless manner from the start of reception of a received packet by generating a main sampling clock for signal processing such as bitwise addition processing from a clock built into a receiving circuit and, once the reproducing sampling clock stabilizes, by adopting the reproducing sampling clock as the main sampling clock.

By making the number of taps of a digital filter after bitwise addition processing for reproducing a clock the same as the number of taps of the digital filter after packetwise addition processing, the reception apparatus 2 according to the present embodiment can match a time for processing a packet and a time for reproducing a clock with each other and achieve more accurate signal processing.

Note that the communication processing executed by the CPU by reading software (program) in each embodiment described above may be executed by various kinds of processors other than the CPU. Examples of such processors include a PLD (Programmable Logic Device) of which a circuit configuration can be changed after being manufactured such as an FPGA (Field-Programmable Gate Array) and a dedicated electric circuit which is a processor having a circuit configuration exclusively designed to execute specific processing such as an ASIC (Application Specific Integrated Circuit). In addition, the communication processing may be executed by one of the various kinds of processors or a combination of two or more processors of a same kind or different kinds (for example, a combination of a plurality of FPGAs or a combination of a CPU and an FPGA). Furthermore, more specifically, hardware-like structures of the various kinds of processors are electric circuits which combine circuit elements such as semiconductor elements.

While a mode in which the program for communication processing is stored (installed) in advance in a ROM or a storage has been explained in each embodiment described above, the program is not limited thereto. The program may be provided in a mode of being recorded in a non-transitory recording medium such as a CD-ROM (Compact Disk Read Only Memory), a DVD-ROM (Digital Versatile Disk Read Only Memory), and a USB (Universal Serial Bus) memory. Alternatively, the program may be provided in a mode of being downloaded from an external apparatus via a network.

[Reference Signs List]

1    Transmission apparatus

| 2 | Reception apparatus |
|---|---|
| 3 | Transmitter |
| 4 | Receiver |
| 5 | Packet |
| 6 | Received signal |
| 7 | Addition processing unit |
| 8 | Clock pattern reproducing unit |
| 9 | Reproduced clock |
| 10 | Clock reproducing unit |
| 11 | Main sampling clock |
| 12 | Addition processing unit |
| 13 | Synchronous word detection and data extraction unit |
| 14 | Received data |
| 15 | Packet primary memory |
| 16 | Packet receive buffer |
| 17 | Packet secondary memory |
| 18 | FIR digital filter |
| 19 | Output data |
| 20 | Preamble |
| 21 | Synchronous word |
| 22 | Payload |
| 23 | Postamble |
| 24 | Synchronous word retrieval buffer |
| 25 | Reference word |
| 26 | Correlator |
| 27 | Bit primary memory |
| 28 | Bit receive buffer |
| 29 | Bit secondary memory |
| 30 | FIR digital filter |
| 31 | Phase frequency comparator |
| 32 | Digital loop filter |
| 33 | Numerically controlled oscillator |
| 34 | Asynchronous high-speed clock |
| 35 | N frequency divider |
| 36 | Frequency-divided clock |
| 37 | Reproducing sampling clock |
| 38 | Asynchronous sampling clock |
| 39 | Sampling clock switcher |
| 40 | Lock signal |

**Claims**

1. A communication apparatus, comprising:

   a first adding unit that adds data, obtained by sampling a repetitively arrived packet by a clock with a frequency that is $N1$-times a communication speed, to an addition result of previously arrived packets every time the packet arrives;
   a first holding unit that holds the addition result of the first adding unit;
   a first digital filter with $N2$ taps (where $N2$ is an integer of 2 or more and $N1$ or less) that processes the addition result, held by the first holding unit, in synchronization with a sampling clock; and
   a second holding unit that holds a processing result of the first digital filter.

2. The communication apparatus according to claim 1, further comprising:

   a correlation unit that correlates a result processed by the first digital filter with a synchronous word; and
   a data acquiring unit that retrieves data from the result processed by the first digital filter at a timing where correlation by the correlation unit increases.

3. The communication apparatus according to claim 1, further comprising:

   a second adding unit that adds data, obtained by sampling each bit constituting the arrived packet by the clock with a frequency that is $N1$-times a communication speed, to an addition result of previously arrived bits every time a next bit arrives;
   a third holding unit that holds an addition result of the second adding unit;
   a second digital filter with $N3$ taps (where $N3$ is an integer of 2 or more and $N1$ or less) that processes the addition result, held by the third holding unit, in synchronization with the sampling clock;
   a fourth holding unit that holds a processing result of the second digital filter;
   a clock pattern reproducing unit that reproduces a clock waveform included in bit data from data held by the fourth holding unit; and
   a clock reproducing unit that reproduces a sampling clock synchronized with the arrived packet from the clock waveform reproduced by the clock pattern reproducing unit.

4. The communication apparatus according to claim 3, wherein
   the clock reproducing unit includes:

   a numerically controlled oscillator that is driven by another clock;
   a phase frequency comparator that compares a reproduced clock obtained by binarizing a clock waveform reproduced by the clock pattern reproducing unit and a frequency-divided clock of the sampling clock to be reproduced and that outputs a signal in accordance with a phase difference and a frequency difference; and
   a loop filter that generates a control signal for controlling the numerically controlled oscillator from an output signal of the phase frequency comparator.

5. The communication apparatus according to claim 3, wherein a value of N2 and a value of N3 are the same.

6. The communication apparatus according to claim 3, further comprising:

a lock signal generating unit that validates a lock signal when it is detected that a frequency and a phase of the sampling clock reproduced by the clock reproducing unit are stable; and
a clock switching unit that switches to a sampling clock generated from an internal operating clock when the lock signal is not valid and switches to a sampling clock reproduced by the clock reproducing unit when the lock signal is valid.

7. A communication method causing a processor to execute processing of:

adding data, obtained by sampling a repetitively arrived packet by a clock with a frequency that is N1-times a communication speed, to an addition result of previously arrived packets every time the packet arrives;
causing a first memory to hold the result of the addition;
causing a digital filter with N2 taps (where N2 is an integer of 2 or more and N1 or less) to process the addition result, held in the first memory, in synchronization with a sampling clock; and
causing a second memory to hold a processing result of the digital filter.

8. A communication program causing a computer to execute processing of:

adding data, obtained by sampling a repetitively arrived packet by a clock with a frequency that is N1-times a communication speed, to an addition result of previously arrived packets every time the packet arrives;
causing a first memory to hold the result of the addition;
causing a digital filter with N2 taps (where N2 is an integer of 2 or more and N1 or less) to process the addition result, held in the first memory, in synchronization with a sampling clock; and
causing a second memory to hold a processing result of the digital filter.

9. A communication system, comprising:

a transmitting-side communication apparatus; and
a receiving-side communication apparatus, wherein
the transmitting-side communication apparatus includes a transmitting unit that repetitively transmits a single packet, and
the receiving-side communication apparatus includes:

a first adding unit that adds data, obtained by sampling a packet repetitively arriving from the transmitting-side communication apparatus by a clock with a frequency that is N1-times a communication speed, to an addition result of previously arrived packets every time the packet arrives;
a first holding unit that holds the addition result of the first adding unit;
a first digital filter with N2 taps (where N2 is an integer of 2 or more and N1 or less) that processes the addition result, held by the first holding unit, in synchronization with a sampling clock; and
a second holding unit that holds a processing result of the first digital filter.

[Fig. 1]

[Fig. 2]

[Fig. 3]

12

13

PACKETWISE ADDITION
PROCESSING UNIT

SYNCHRONOUS WORD
DETECTION AND DATA
EXTRACTION UNIT

RECEIVED
DATA

14

6

RECEIVED SIGNAL
FROM ANALOG
FRONTEND

MAIN SAMPLING CLOCK

11

CLOCK
REPRODUCING
UNIT

10

BITWISE ADDITION
PROCESSING UNIT

CLOCK PATTERN
REPRODUCING UNIT

REPRODUCED CLOCK

7

8

9

[Fig. 4]

6

RECEIVED SIGNAL FROM
ANALOG FRONTEND

PACKET PRIMARY MEMORY:
TOTAL ADDED VALUE UP TO PREVIOUS PACKETS
(LENGTH: PACKET LENGTH × L, BIT WIDTH: k)

15

1. ADD DATA FOR THIS TIME TO
PREVIOUS DATA AND STORE
RESULT IN PRIMARY MEMORY

PACKET RECEIVE BUFFER:
PACKET DATA FOR THIS TIME
(LENGTH: PACKET LENGTH × L, BIT WIDTH: j)

16

2. AT SAME TIME, ALSO STORE
RESULT IN SECONDARY MEMORY
AND SEND TO DIGITAL FILTER

18

PACKET SECONDARY MEMORY:
TOTAL ADDED VALUE INCLUDING PACKET FOR THIS
TIME (LENGTH: PACKET LENGTH × L, BIT WIDTH: k)

DIGITAL FILTER FOR PACKET PROCESSING
(2 TO N1 TAPS, i BIT WIDTH)

17

SYNCHRONOUS WORD
DETECTION AND DATA
EXTRACTION UNIT

MAIN SAMPLING CLOCK

11

13

[Fig. 5]

12

| 20 | 21 | 22 | 23 |
|---|---|---|---|
| PREAMBLE | SYNCHRONOUS WORD | PAYLOAD | POSTAMBLE |

19

24

SYNCHRONOUS WORD RETRIEVAL BUFFER

26

...

REFERENCE WORD

MAIN SAMPLING CLOCK

25

11

[Fig. 6]

6

RECEIVED SIGNAL FROM ANALOG FRONTEND

BIT PRIMARY MEMORY:
TOTAL ADDED VALUE UP TO PREVIOUS BITS
(LENGTH: L, BIT WIDTH: k) — 27

1. ADD DATA FOR THIS TIME TO PREVIOUS DATA AND STORE RESULT IN PRIMARY MEMORY

BIT RECEIVE BUFFER:
BIT DATA FOR THIS TIME
(LENGTH: L, BIT WIDTH: j) — 28

2. AT SAME TIME, ALSO STORE RESULT IN SECONDARY MEMORY AND SEND TO DIGITAL FILTER

30

BIT SECONDARY MEMORY:
TOTAL ADDED VALUE INCLUDING BIT FOR
THIS TIME (LENGTH: L, BIT WIDTH: k) — 29

DIGITAL FILTER FOR CLOCK PATTERN REPRODUCTION (2 TO N1 TAPS, i BIT WIDTH)

CLOCK PATTERN REPRODUCING UNIT

8

MAIN SAMPLING CLOCK

11

[Fig. 7]

13

9 REPRODUCED CLOCK

31 PHASE FREQUENCY COMPARATOR

40 LOCK SIGNAL

32 DIGITAL LOOP FILTER

NUMERICALLY CONTROLLED OSCILLATOR 33

34 ASYNCHRONOUS HIGH-SPEED CLOCK

36 FREQUENCY-DIVIDED CLOCK

35 N FREQUENCY DIVIDER

38 ASYNCHRONOUS SAMPLING CLOCK

39 SAMPLING LOCK SWITCHER

11 MAIN SAMPLING CLOCK

37 REPRODUCING SAMPLING CLOCK

[Fig. 8]

2

201 CPU

202 ROM

203 RAM

204 STORAGE

205 INPUT UNIT

206 DISPLAY UNIT

207 COMMUNICATION I/F

209

## INTERNATIONAL SEARCH REPORT

| International application No. |
| --- |
| **PCT/JP2022/013977** |

### A. CLASSIFICATION OF SUBJECT MATTER

*H04L 1/08*(2006.01)i; *H04L 7/033*(2006.01)i; *H04L 7/04*(2006.01)i
FI:   H04L1/08; H04L7/033; H04L7/04 200

According to International Patent Classification (IPC) or to both national classification and IPC

### B. FIELDS SEARCHED

Minimum documentation searched (classification system followed by classification symbols)

H04L1/08; H04L7/033; H04L7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2011/046088 A1 (QUADRAC CO., LTD.) 21 April 2011 (2011-04-21) | 1-9 |
| A | JP 51-140404 A (FUJITSU LTD.) 03 December 1976 (1976-12-03) | 1-9 |
| A | JP 8-139707 A (MATSUSHITA ELECTRIC INDUSTRIAL CO., LTD.) 31 May 1996 (1996-05-31) | 1-9 |
| A | JP 2002-9680 A (MATSUSHITA ELECTRIC INDUSTRIAL CO., LTD.) 11 January 2002 (2002-01-11) | 1-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 June 2022** | **28 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/013977**

| Patent document cited in search report | | | Publication date (day/month/year) | Patent family member(s) | | | Publication date (day/month/year) |
|---|---|---|---|---|---|---|---|
| WO | 2011/046088 | A1 | 21 April 2011 | US | 2012/0214407 | A1 | |
| | | | | EP | 2490340 | A1 | |
| | | | | CN | 102668392 | A | |
| | | | | HK | 1171123 | A | |
| JP | 51-140404 | A | 03 December 1976 | (Family: none) | | | |
| JP | 8-139707 | A | 31 May 1996 | US | 5781588 | A | |
| | | | | US | 5987075 | A | |
| | | | | CN | 1135130 | A | |
| JP | 2002-9680 | A | 11 January 2002 | US | 2003/0008623 | A1 | |
| | | | | WO | 2001/099306 | A1 | |
| | | | | EP | 1204218 | A1 | |
| | | | | AU | 6431101 | A | |
| | | | | CN | 1383627 | A | |
| | | | | KR | 10-2002-0020970 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5247888 B